# EUROPÄISCHE PATENTSCHRIFT

(11) **EP 1 542 004 B1**
(45) Veröffentlichungstag und Bekanntmachung des Hinweises auf die Patenterteilung: **08.12.2010**
(21) Anmeldenummer: 04023873.5
(22) Anmeldetag: 07.10.2004
(51) Int. Cl.: G01N 29/22

(54) **Verfahren und Vorrichtung zur zerstörungsfreien Ultraschallprüfung rotationsymmetrischer Werkstücke**
Method and apparatus for nondestructive ultrasound testing of rotation-symmetric work pieces
Procédé et dispositif pour l'éxamination non-destructive, ultrasonore des pièces symétriques rotatives

(30) Priorität: 08.12.2003 DE 10357596; 12.05.2004 DE 102004023871
(43) Veröffentlichungstag der Anmeldung: 15.06.2005
(73) Patentinhaber: Brand, Renate, 97502 Euerbach (DE); Madinger, Anette, 97502 Euerbach (DE); Madinger, Jürgen, 97502 Euerbach (DE)
(72) Erfinder: Brand, Renate, 97440 Werneck (DE); Madinger, Anette, 97502 Euerbach (DE); Madinger, Jürgen, 97714 Eltinghausen (DE)
(74) Vertreter: Gassner, Wolfgang

(56) Entgegenhaltungen:
- WO-A-00/43769
- US-A- 2 525 305
- US-A- 2 758 706
- US-A- 3 708 079
- US-A- 5 005 417

## Beschreibung

Die Erfindung betrifft ein Verfahren und eine Vorrichtung zur zerstörungsfreien Prüfung rotationssymmetrischer Werkstücke nach dem Oberbegriff der Patentansprüche 1 und 14.

Ein solches Verfahren und eine solche Vorrichtung sind aus der US 2,758,706 bekannt.

Nach dem Stand der Technik ist es bekannt, rotationssymmetrische Werkstücke, beispielsweise Walzen für wälzlager, auf Fehler zu prüfen. Gängige Praxis ist es, derartige Werkstücke nach der Herstellung einer Wirbelstromprüfung zu unterziehen. Eine solche Wirbelstromprüfung ist beispielsweise aus Heptner/Stroppe:"Magnetische und magnetinduktive Werkstoffprüfung", 3. Auflage, 1973, S. 267-271 bekannt. Sie eignet sich zur vollautomatischen Ausschussermittlung in der Massenfertigung. Mit der Wirbelstromprüfung können allerdings nur oberflächennahe Fehler erkannt werden. Bei der Wirbelstromprüfung werden mitunter durch falsch-positive Messergebnisse auch Werkstücke ausgesondert, die im Wesentlichen fehlerfrei sind. Infolgedessen ist man dazu übergegangen, die in Folge der Wirbelstromprüfung ausgesonderten Werkstücke nochmals zu prüfen, und zwar mittels Ultraschallprüfung.

Die Ultraschallprüfung, wie sie z.B. aus der EP 0 420 639 A2 bekannt ist, ermöglicht das Erkennen sowohl oberflächennaher als auch im Werkstück eingeschlossener Fehler. Zur Durchführung der Ultraschallprüfung wird jedes zu prüfende Werkstück in eine Rotationsvorrichtung eingespannt oder eingelegt und nachfolgend rotierend, beispielsweise nach dem Ultraschall-Impulsecho Verfahren, geprüft. Eine solche Ultraschallprüfung ist äußerst empfindlich. Eine Interpretation der damit gewonnenen Ergebnisse ist mitunter schwierig. Die stückweise Prüfung der Werkstücke erfordert einen hohen Kosten- und Zeitaufwand.

Aufgabe der Erfindung ist es, die Nachteile nach dem Stand der Technik zu beseitigen. Es sollen insbesondere ein Verfahren und eine Vorrichtung angegeben werden, mit denen eine möglichst effiziente Prüfung einer Vielzahl von Werkstücken mittels Ultraschallverfahren möglich ist. Nach einem weiteren Ziel soll die Ultraschallprüfung möglichst so ausgeführt werden, dass damit sicher und zuverlässig fehlerhafte Werkstücke von fehlerfreien unterschieden werden können.

Diese Aufgabe wird durch die Merkmale der Ansprüche 1 und 14 gelöst. Zweckmäßige Ausgestaltungen ergeben sich aus den Merkmalen der Ansprüche 2 bis 13 und 15 bis 29.

Nach Maßgabe der Erfindung ist vorgesehen, dass die Werkstücke in einer durch zwei nebeneinander angeordnete Walzen gebildeten Förderrinne transportiert werden, wobei die Walzen gleichsinnig mittels der Rotationseinrichtung angetrieben werden, wobei eine Neigung und/oder Spreizung der Walzenachsen so eingestellt wird, dass die Werkstücke mit einer vorgegebenen Geschwindigkeit entlang des Transportwegs transportiert werden.

Nach einem wesentlichen Merkmal der Erfindung, werden die Werkstücke mittels einer Transportvorrichtung entlang eines Transportwegs transportiert. Sie werden auf dem Transportweg um ihre Achse rotiert. Infolgedessen können sie während des Transports an einer Ultraschallprüfeinrichtung vorbei geführt und sowohl auf Oberflächen- als auch auf im Inneren der Werkstücke eingeschlossene Fehler geprüft werden. Dabei findet der Transport der Werkstücke in einer Flüssigkeit statt. Eine Verwendung von Flüssigkeit als Kopplungsmedium durchgeführte Ultraschallprüfung ermöglicht eine sicheres und zuverlässiges Erkennen fehlerhafter Werkstücke. Das vorgeschlagene Verfahren eignet sich zumindest zu einer teilautomatischen Prüfung von Werkstücken mittels Ultraschall.

Nach einer vorteilhaften Ausgestaltung, werden die Werkstücke gravitativ zugeführt. Sie können dabei beispielsweise rollend in einem schräg zur Transportvorrichtung hin abfallenden Kanal zugeführt werden. In diesem Fall gelangt immer dann ein neues Werkstück auf die Transportvorrichtung, wenn ein zuvor zugeführtes Werkstück bereits einen seiner Länge entsprechenden Weg auf dem Transportweg zurückgelegt hat.

Vorteilhafterweise werden gleichzeitig mehrere Werkstücke in einer mit einer Rotationseinrichtung versehenen Transportrinne transportiert. Dabei können die Werkstücke mittels der Rotationseinrichtung gleichzeitig und gleichsinnig rotiert werden. Das ermöglicht beispielsweise eine gleichzeitige Prüfung mehrerer in der Förderrinne befindlicher Werkstücke. Die Werkstücke können dabei nach unterschiedlichen Kriterien geprüft werden. Das vorgeschlagene Verfahren ist besonders effizient. Es ist insbesondere nicht mehr erforderlich, jedes Werkstück gesondert in eine Rotationsvorrichtung einzuspannen, nachfolgend zu prüfen und dann wieder aus der Rotationsvorrichtung herauszunehmen.

Nach einer besonders vorteilhaften Ausgestaltung werden die Werkstücke taktweise entlang des Transportwegs transportiert. Das erleichtert die Verfahrensführung. Als fehlerhaft erkannte Werkstücke können einem bestimmten Takt zugeordnet und infolgedessen einfach ausgesondert werden. Bei Verwendung eines taktweisen Vorschubs bleiben die Werkstücke für eine vorgegebene Dauer in der Transportvorrichtung an einem bestimmten Ort. Sie werden an diesem Ort rotiert und können dort einer Prüfung unterzogen werden.

Als zweckmäßig hat sich erwiesen, dass die Werkstücke durch ein in die Förderrinne eingreifendes Schubmittel taktweise transportiert werden. Das Schubmittel kann insbesondere so ausgeführt sein, dass es zur axialen Länge der Werkstücke korrespondiert. Infolgedessen können durch die Vorschubmittel die Werkstücke auch bei einer Rotation in der Transportrichtung sicher und zuverlässig an Ort und Stelle gehalten werden. Das ermöglicht eine besonders zuverlässige Prüfung. Damit ist es insbesondere auch möglich, nicht nur in Form zylindrischer Walzen ausgeführte Werkstücke, sondern auch Tonnenwalzen und andere rotationssymmetrische zur Herstellung von Lagern verwendete Körper einer automatisierten Prüfung mittels Ultraschall zu unterziehen. Das vorgeschlagene Verfahren eignet sich insbesondere auch für Walzen mit einer balligen oder konvexen Mantelfläche.

Zweckmäßigerweise werden die Werkstücke entlang des Transportwegs in einer parallel zur Axialrichtung der Werkstücke verlaufenden Transportrichtung transportiert. Dabei kann die Transportrinne durch zwei nebeneinander angeordnete gleichsinnig rotierende Walzen gebildet sein.

Der Begriff "Transportrinne", ist im Sinne der vorliegenden Erfindung allgemein zu verstehen. Eine solche Transportrinne muss keinen geschlossenen Boden aufweisen, sondern lediglich ähnlich einer Rinne eine Transportfunktion entlang eines Transportwegs erfüllen.

Die Werkstücke können im Wesentlichen koaxial zu den Walzen in der Transportrinne transportiert werden. Zweckmäßigerweise liegen die Werkstücke reibschlüssig an den Walzen an und werden durch deren Rotation während des Transports um die Achse rotiert. Eine Neigung und/oder Spreizung der Walzenachsen wird so eingestellt, dass die Werkstücke mit einer vorgegebenen Geschwindigkeit entlang des Transportwegs transportiert werden. Die Neigung und/oder die Spreizung der Walzenachsen ist so gewählt, dass sich insgesamt eine Neigung der zwischen den Walzen gebildeten Transportrinne von einem Zuführort zu einem Abführort der Werkstücke ergibt. - Die vorgeschlagene Transportvorrichtung ist einfach aufgebaut. Sie ist störunanfällig und lässt sich insbesondere auch untergetaucht in einer Flüssigkeit problemlos betreiben. Sie ermöglicht einen Transport entlang des durch die Transportrinne gegebenen Transportwegs sowie gleichzeitig eine Rotation der Werkstücke um deren Achse. Infolgedessen können die Werkstücke an zumindest einer am Transportweg vorgesehenen Ultraschallprüfeinrichtung vorbeigeführt werden. Zur Ultraschallprüfung ist es also nicht unbedingt erforderlich, die Ultraschallprüfeinrichtungen zu bewegen.

Nach einer weiteren Ausgestaltung können die Werkstücke auch mittels eines eine Wand der Förderrinne bildenden Förderbands um ihre Achse rotiert werden. In diesem Fall steht die Achse der rotationssymmetrischen Werkstücke senkrecht zur Transportrichtung. Der Transport erfolgt bei dieser Ausgestaltung zweckmäßigerweise taktweise mittels der in die Förderrinne eingreifenden Vorschubmittel. Die Schubmittel halten in diesem Fall die rotierenden Werkstücke jeweils für eine bestimmte Zeitdauer in einer vorgegebenen Position in der Transportrichtung. Solange die Werkstücke in dieser Position gehalten werden, ist beispielsweise eine Prüfung mittels Ultraschallvorrichtungen möglich, die entlang einer Oberfläche des zu prüfenden Werkstücks bewegt werden.

Nach einer vorteilhaften Ausgestaltung werden die Werkstücke auf dem Transportweg mittels einer ersten Ultraschallprüfeinrichtung auf Oberflächenfehler geprüft. Die Werkstücke können auf dem Transportweg auch mittels einer zweiten Ultraschallprüfeinrichtung auf im Werkstück eingeschlossene Fehler geprüft werden. Mit der vorgeschlagenen 2-fachen Prüfung können sicher und zuverlässig sämtliche relevanten Fehler des Werkstücks erkannt werden.

Nach einer weiteren Ausgestaltung werden fehlerhafte Werkstücke identifiziert und nachfolgend ausgesondert. Dabei ist es insbesondere auch möglich, Werkstücke mit Oberflächenfehlern und Werkstücke mit im Inneren eingeschlossenen Fehlern getrennt voneinander auszusondern. Eine solche Trennung der ausgesonderten Werkstücke je nach Art des identifizierten Fehlers, kann im Hinblick auf Qualitätssicherungsmaßnahmen vorteilhaft sein.

Nach einer weiteren Ausgestaltung werden die Werkstücke mittels einer, vorzugsweise elektromotorisch angetriebenen, Fördervorrichtung weggeführt und aus der Flüssigkeit herausgehoben. Zweckmäßigerweise werden die als fehlerhaft identifizierten Werkstücke nach dem Herausheben aus der Flüssigkeit ausgesondert. Das erleichtert die Handhabung der ausgesonderten Werkstücke.

Nach weiterer Maßgabe der Erfindung ist bei einer Vorrichtung zur zerstörungsfreien Prüfung rotationssymmetrischer Werkstücke vorgesehen, dass die Transportvorrichtung zwei nebeneinander angeordnete, eine Förderrinne bildende Walzen aufweist, und dass die Rotationseinrichtung eine Antriebseinrichtung zum gleichsinnigen Rotieren der Walzen ist, wobei die Walzenachsen eine einstellbare Neigung und/oder Spreizung aufweisen.
mit einer in einem Behälter zur Aufnahme einer Flüssigkeit vorgesehenen Transportvorrichtung zum Transport der Werkstücke entlang eines Transportwegs,
einer Rotationseinrichtung zum Rotieren der Werkstücke um ihre Achse und
einer Einrichtung zur Prüfung der rotierenden Werkstücke mittels Ultraschall.

Die vorgeschlagene Vorrichtung erlaubt eine effiziente Ultraschallprüfung einer Vielzahl von Werkstücken. Die Ultraschallprüfung kann teil- oder auch vollautomatisch erfolgen. Damit ist erstmals eine routinemäßige Ultraschallprüfung in der Massenproduktion von Werkstücken möglich.

Nach einer Ausgestaltung ist eine Einrichtung zum aufeinander folgenden Zuführen der Werkstücke zur Transportvorrichtung und/oder eine Einrichtung zum Wegführen der Werkstücke von der Transportvorrichtung vorgesehen. Die vorgeschlagenen Einrichtungen ermöglichen einen automatisierten Betrieb.

Zweckmäßigerweise weist die Einrichtung zum Zuführen der Werkstücke einen zur Transportvorrichtung hin schräg abfallenden Kanal auf. Der Kanal kann eine einstellbare Breite aufweisen, so dass damit Walzen einer unterschiedlichen Länge rollend zur Transporteinrichtung zugeführt werden können.

Nach einer vorteilhaften Ausgestaltung ist stromabwärts der Einrichtung zum aufeinander folgenden Zuführen eine mit der Rotationseinrichtung versehene Förderrinne vorgesehen. Die Förderrinne kann so ausgebildet sein, dass darin gleichzeitig mehrere Werkstücke aufnehmbar sind. Die Rotationseinrichtung ist zweckmäßigerweise so ausgebildet, dass damit die Werkstücke gleichzeitig und gleichsinnig rotiert werden. Das ermöglicht eine gleichförmige und gleichzeitige Prüfung mehrerer Werkstücke. Die vorgeschlagene Vorrichtung ist besonders einfach aufgebaut. Es ist zur Rotation der Werkstücke nicht für jedes Werkstück eine gesonderte Rotationseinrichtung erforderlich.

Nach einer weiteren besonders vorteilhaften Ausgestaltung ist eine Einrichtung zum taktweisen Transport der Werkstücke entlang des Transportwegs vorgesehen. Damit ist es möglich, die Werkstücke rotierend für die Zeitdauer der Prüfung an einem bestimmten vorgegebenen Ort auf dem Transportweg zu halten. Das ermöglicht insbesondere eine Prüfung nichtzylindrischer rotationssymmetrischer Werkstücke, beispielsweise von Tonnenwalzen.

Zweckmäßigerweise weist die Einrichtung zum taktweisen Transport in die Förderrinne eingreifende Schubmittel auf. Ein Abstand zweier aufeinander folgender Schubmittel kann so gewählt sein, dass er zur axialen Länge der zu prüfenden Werkstücke korrespondiert. Damit können insbesondere Tonnenwalzen rotierend in einer vorgegebenen Position zur Durchführung der Prüfung auf den Transportweg gehalten werden. Die Einrichtung zum taktweisen Transport, weist zweckmäßigerweise eine einzige Antriebseinrichtung auf. Damit ist gewährleistet, dass sämtliche Werkstücke im selben Takt und mit derselben Geschwindigkeit auf dem Transportweg taktweise transportiert werden.

Die Transportvorrichtung weist zwei nebeneinander angeordnete, eine Transportrinne bildende, Walzen auf. Ein zwischen den Umfangsflächen der Walzen vorgesehener Abstand ist einstellbar. Der zwischen den Umfangsflächen der Walzen gewählte Abstand ist so bemessen, dass er in jedem Fall kleiner ist als der Durchmesser der zu transportierenden Werkstücke.

Eine Neigung und/oder Spreizung der Walzenachsen einstellbar. Durch eine geeignete Einstellung der Neigung und/oder Spreizung der Walzenachsen, kann eine vorgegebene Transportgeschwindigkeit der Werkstücke entlang des Transportwegs eingestellt werden. Ferner ist eine Antriebseinrichtung zum gleichsinnigen Rotieren der Walzen vorgesehen. Es kann sich dabei zweckmäßigerweise um einen außerhalb des Behälters angeordneten Elektromotor handeln, welcher über einen Keilriemen mit an den Walzen vorgesehenen Antriebsscheiben verbunden ist.

Die Transportvorrichtung kann auch ein Förderband aufweisen. Das Förderband dient zweckmäßigerweise zur gleichzeitigen und gleichsinnigen Rotation einer Mehrzahl von auf dem Transportweg befindlichen Werkstücken. Die Werkstücke stehen in diesem Fall mit ihrer Rotationsachse senkrecht zur Transportrichtung. Die Förderrinne kann aus zwei schräg aufeinander stehenden Wänden gebildet sein, wobei eine der Wände durch das Förderband gebildet ist. Die andere Wand kann zum Abstützen der Werkstücke dienen.

Vorteilhafterweise sind die Walzen oder das Förderband aus einem für Ultraschall im Wesentlichen transparenten Material, vorzugsweise aus Kunststoff oder Gummi, hergestellt. Damit werden unerwünschte durch die Walzen hervorgerufene Echos bei der Ultraschallprüfung vermieden. Es kann eine besonders exakte Ultraschallprüfung durchgeführt werden.

Eine Umfangsfläche der Walzen oder des Förderbands kann aus Kunststoff, Gummi oder Silkon hergestellt sein. Zweckmäßigerweise ist die Umfangsfläche aus einem Material hergestellt, das einen reibschlüssigen Kontakt zu den zu transportierenden Werkstücken auch dann gewährleistet, wenn als Flüssigkeit Öl verwendet wird.

Nach einer weiteren Ausgestaltung ist in der Nähe des Transportwegs eine an einer, vorzugsweise elektromotorisch antreibbaren, ersten Bewegungseinrichtung angebrachte erste Ultraschallprüfeinrichtung zur Prüfung auf Oberflächenfehler vorgesehen. Des Weiteren kann in der Nähe des Transportwegs eine an einer, vorzugsweise ebenfalls elektromotorisch antreibbaren, zweiten Bewegungseinrichtung angebrachte zweite Ultraschallprüfeinrichtung zur Prüfung auf im Werkstück eingeschlossene Fehler vorgesehen sein. Bei den vorgeschlagenen Ultraschallprüfeinrichtungen kann es sich um herkömmliche Ultraschallköpfe handeln, die mittels der Bewegungseinrichtung in eine geeignete Position relativ zu den zu prüfenden Werkstücken gestellt werden können. Die Bewegungseinrichtungen sind zweckmäßigerweise elektromotorisch antreibbar. Infolgedessen ist es möglich, einen solchen Antrieb mittels eines Mikroprozessors zu steuern. So können beispielsweise für bestimmte vorgegebene Werkstoffgeometrien geeignete Positionen für die erste und die zweite Ultraschallprüfeinrichtung gespeichert werden. Bei einem Wechsel auf eine andere Werkstoffgeometrie kann eine für jede der Ultraschallprüfeinrichtungen gespeicherte geeignete Position abgerufen und automatisch mittels der jeweiligen Bewegungseinrichtung schnell und einfach eingestellt werden. Mittels der Bewegungseinrichtungen ist es aber auch möglich, die Ultraschallprüfeinrichtungen entlang eines vorgegebenen Wegs über die Oberfläche der zu prüfenden Werkstücke zu führen. Der Weg kann in Axialrichtung der zu prüfenden Werkstücke verlaufen. Er kann aber auch gekrümmt sein und von der Axialrichtung abweichen. Die Wahl eines geeigneten Wegs hängt insbesondere von der Oberflächengestaltung des zu prüfenden Werkstücks ab. Zur reproduzierbaren Bewegung der Ultraschallprüfeinrichtungen werden die Bewegungseinrichtungen zweckmäßigerweise per Verwendung eines geeigneten Programms angesteuert. Das ermöglicht eine automatisierte Prüfung von rotationssymmetrischen Werkstücken, welche insbesondere eine nichtzylindrische Geometrie aufweisen.

Nach einer weiteren Ausgestaltung ist eine Einrichtung zum Identifizieren fehlerhafter Werkstücke vorgesehen. Es handelt sich dabei beispielsweise um einen Computer mit einem geeigneten Programm zur Verarbeitung der von den Ultraschallköpfen gelieferten Signale. Des Weiteren kann eine Einrichtung zum Aussondern fehlerhafter Werkstücke vorgesehen sein. Eine solche Einrichtung ist zweckmäßigerweise außerhalb des Behälters angeordnet. Bei der Einrichtung zum Aussondern kann es sich um herkömmliche elektrisch, hydraulisch, pneumatisch oder magnetisch antreibbaren Stellmittel handeln. Die Einrichtung zum Aussondern kann zweckmäßigerweise mittels des vorerwähnten Computers gesteuert werden. Zur Steuerung können ferner in herkömmlicher Weise Lichtschranken entlang des Transportwegs vorgesehen sein, mittels derer eine eindeutige Reihenfolge der geprüften Werkstücke festgelegt und ein Aussondern als fehlerhaft identifizierter Werkstücke stromabwärts der Ultraschallprüfeinrichtungen bewirkt werden kann.

Vorteilhafterweise ist ferner eine Steuerung zum automatischen, vorzugsweise taktweisen, Transport und zur Steuerung der Bewegungseinrichtungen vorgesehen. Bei einer solchen Steuerung können die Bewegungen der Ultraschallprüfeinrichtungen sowie die taktweisen Vorschubbewegungen der Werkstücke koordiniert, beispielsweise mittels eines Computerprogramms, durchgeführt werden. Das ermöglicht eine schnelle und effiziente Prüfung der Werkstücke.

Nachfolgend wird ein Ausführungsbeispiel der Erfindung anhand der Zeichnung näher erläutert. Es zeigen:
- Fig. 1: eine Draufsicht auf eine erste erfindungsgemäße Vorrichtung,
- Fig. 2: eine Detailansicht gemäß Fig. 1,
- Fig. 3: eine Detailansicht gemäß Fig. 1,
- Fig. 4: eine Teilschnittansicht gemäß der Schnittlinie A-A' in Fig. 1,
- Fig. 5: eine Draufsicht auf die in Fig. 1 gezeigte Transportvorrichtung,
- Fig. 6: eine Seitenansicht gemäß Fig. 5,
- Fig. 7: eine Draufsicht auf eine Ultraschallprüfeinrichtung,
- Fig. 8: eine Seitenansicht gemäß Fig. 7,
- Fig. 9: eine Querschnittsansicht gemäß der Schnittlinie B-B' in Fig. 1,
- Fig. 10: eine Draufsicht auf eine zweite erfindungsgemäße Vorrichtung,
- Fig. 11: eine Schnittansicht gemäß der Schnittlinie C-C' in Fig. 10,
- Fig. 12: eine schematische Seitenansicht der Transportvorrichtung nach Fig. 10,
- Fig. 13: eine schematische Seitenansicht einer weiteren Transportvorrichtung und
- Fig. 14: eine Querschnittsansicht der weiteren Transportvorrichtung gemäß Fig. 13.

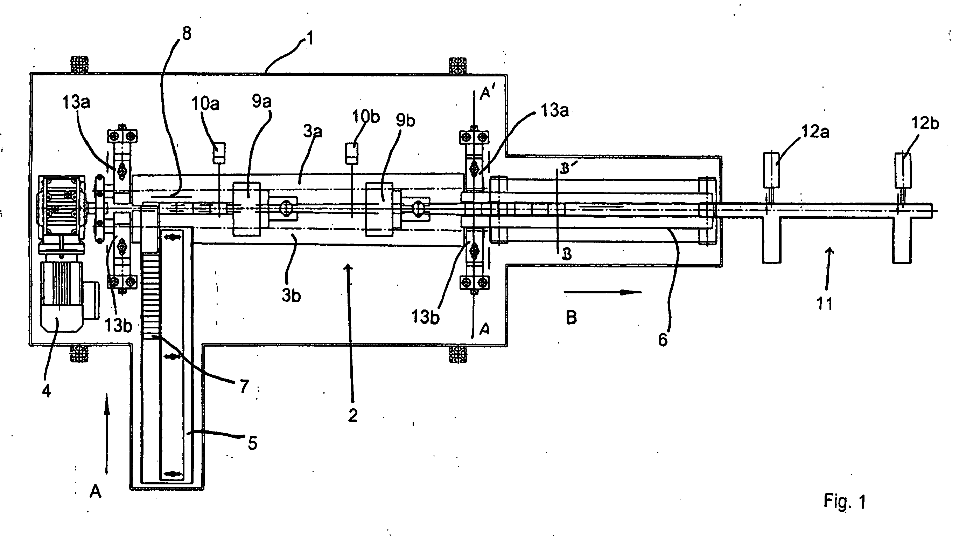

In den Fig. 1 bis 3 ist in einem z. B. aus Metall oder Kunststoff hergestellten Behälter 1 eine allgemein mit dem Bezugszeichen 2 bezeichnete Transportvorrichtung aufgenommen. Die Höhe der Wände des Behälters 1 ist so gewählt, dass die Transportvorrichtung 2 vollständig in eine im Behälter 1 aufgenommene Flüssigkeit, z. B. Öl, untergetaucht werden kann.

Die Transportvorrichtung 2 umfasst zwei Walzen 3a und 3b, welche mittels eines Motors 4 antreibbar sind. Die Walzen 3a, 3b sind zweckmäßigerweise aus Kunststoff hergestellt. Ihre Oberfläche kann aus Gummi gebildet sein. Mit dem Bezugszeichen 5 ist eine Einrichtung zum Zuführen und mit dem Bezugszeichen 6 eine Einrichtung zum Abführen von rotationssymmetrisch ausgebildeten Werkstücken 7 bezeichnet. Entlang einer mit dem Pfeil 8 bezeichneten Transportrichtung sind an einem (hier nicht gezeigten) Gestell elektromotorisch bewegbare Ultraschallprüfeinrichtungen 9a und 9b angeordnet. Jeder der Ultraschallprüfeinrichtung 9a und 9b ist eine Lichtschranke 10a sowie 10b zugeordnet. Es kann sich dabei um herkömmliche Laser-Lichtschranken handeln. Stromabwärts der Einrichtung 6 zum Abführen ist eine Einrichtung 11 zum Aussondern fehlerhafter Werkstücke 7 vorgesehen. Die Einrichtung 11 umfasst insbesondere zwei Schubmittel 12a und 12b, mit denen fehlerhafte Werkstücke 7 aus dem Strom der abgeführten Werkstücke 7 ausgestoßen werden können. Bei den Schubmitteln 12a, 12b kann es sich beispielsweise um Pneumatikzylinder mit Schubstangen handeln.

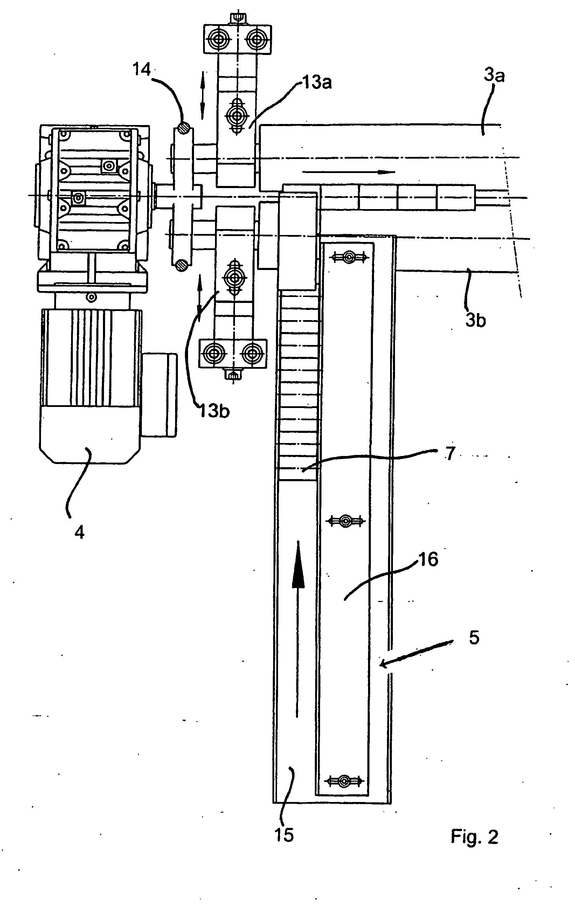

Fig. 2 zeigt eine Detailansicht gemäß Fig. 1. Daraus ist ersichtlich, dass jede der Walzen 3a, 3b jeweils in Lagerböcken 13a, 13b aufgenommen sind. Die Lagerböcke 13a und 13b können sowohl in der horizontalen als auch in der vertikalen Richtung verstellt werden. Die Walzen 3a und 3b sind über einen gemeinsamen Keilriemen 14 mit dem Motor 4 verbunden. Die Einrichtung 5 zum Zuführen weist einen Zuführkanal 15 auf, dessen Breite mittels eines Winkelblechs 16 einstellbar ist.

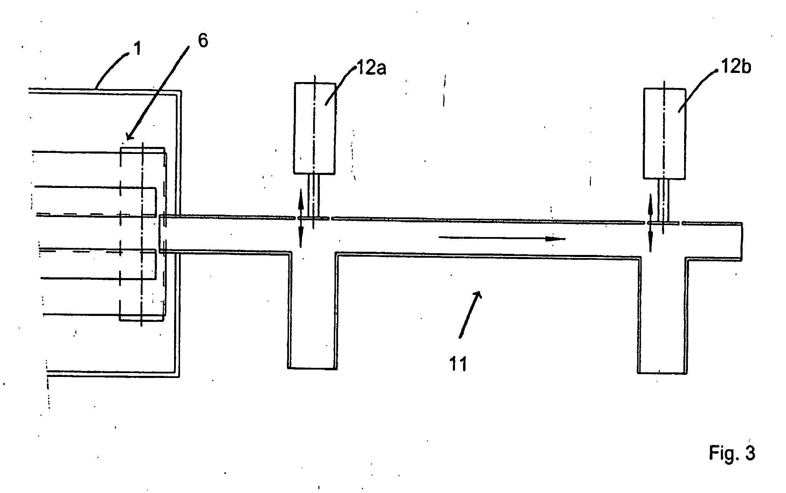

Fig. 3 zeigt nochmals im Detail die Einrichtung 11 zum Aussondern.

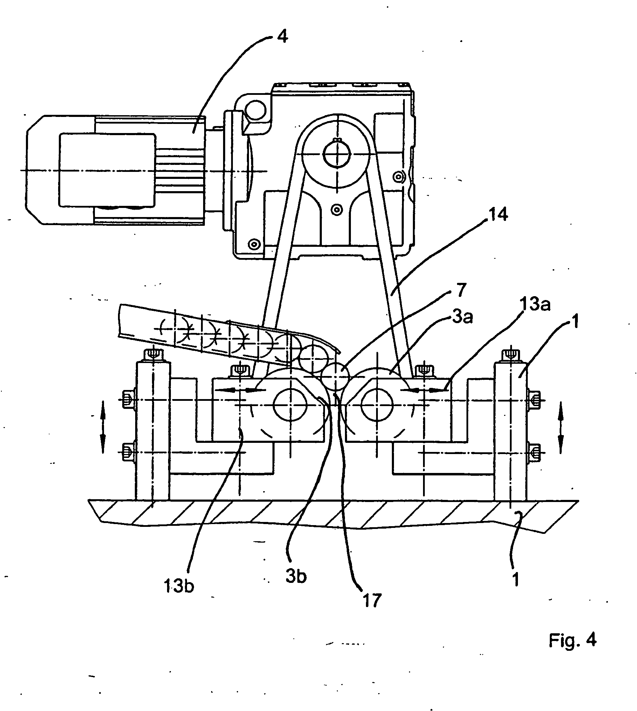

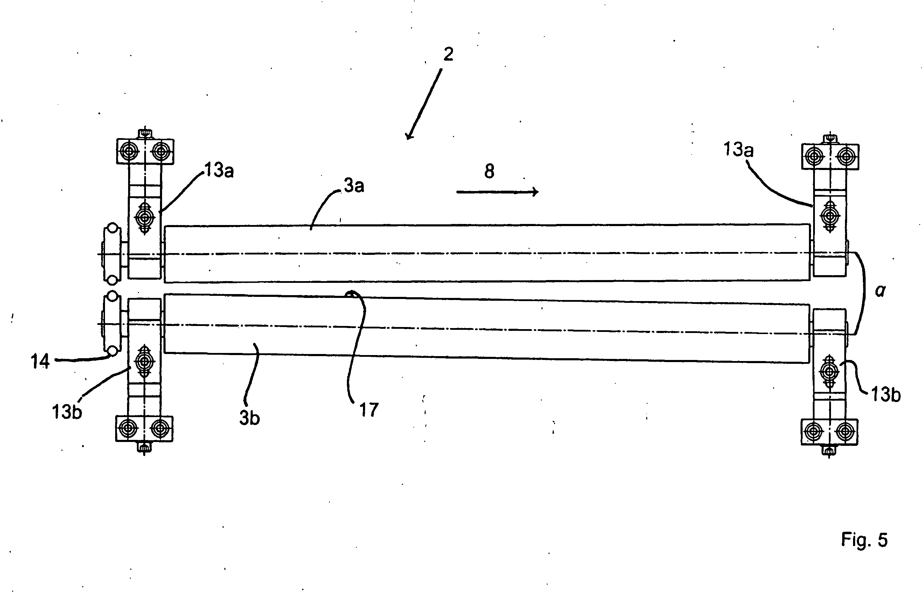

Fig. 4 bis 6 zeigen die Transportvorrichtung 2. Die Walzen 3a, 3b sind so angeordnet, dass deren Walzenachsen in der Draufsicht (siehe Fig. 5) einen spitzen Winkel α bilden. Der spitze Winkel α öffnet sich in Transportrichtung 8. Ein Abstand zwischen den Walzen 3a und 3b ist so gewählt, dass er stets kleiner als der Durchmesser der zu prüfenden Werkstücke 7 ist. Infolgedessen bilden die beiden Walzen 3a, 3b eine Förderrinne 17.

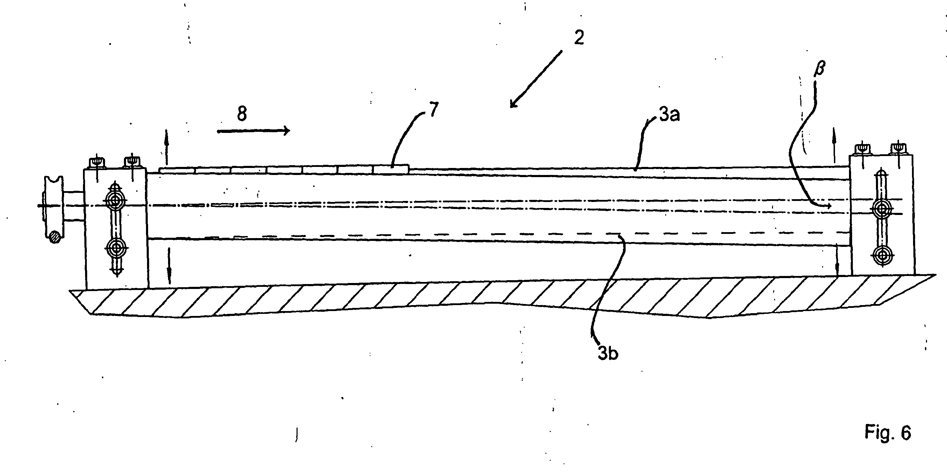

Wie aus Fig. 6 ersichtlich ist, sind die Walzenachsen der Walzen 3a und 3b auch vertikal um einen weiteren spitzen Winkel β gegeneinander verkippt. Auch der Winkel β öffnet sich in Transportrichtung 8.

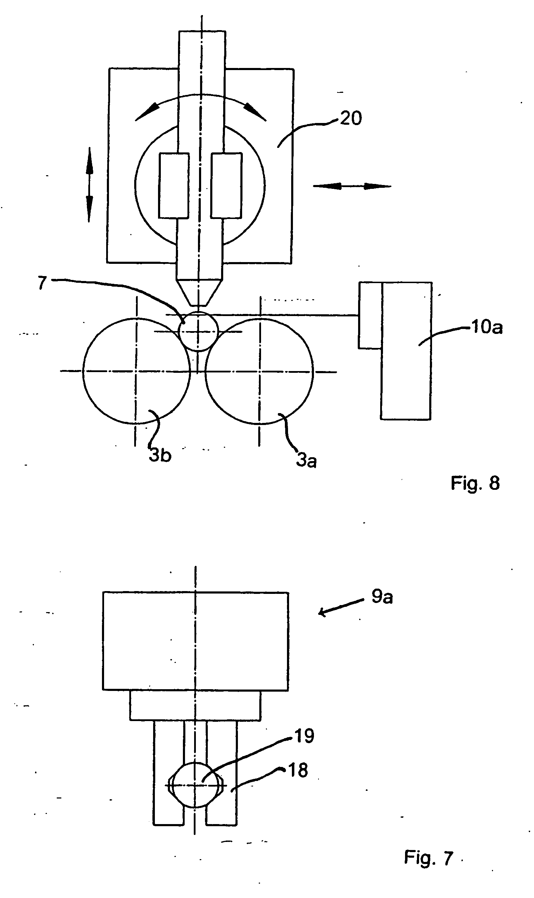

Die Fig. 7 und 8 zeigen im Detail eine der Ultraschallprüfeinrichtungen, hier die Ultraschallprüfeinrichtung 9a. Sie umfasst eine Klemmvorrichtung 18 zur Aufnahme eines Ultraschallprüfkopfs 19. Die Klemmvorrichtung 18 ist um eine im Wesentlichen parallel zu den Walzenachsen verlaufende Rotationsachse rotierbar. Ein die Klemmvorrichtung 18 aufnehmender Träger 20 kann mit einer geeigneten Antriebsvorrichtung (hier nicht gezeigt) in vertikaler Richtung als auch in einer senkrecht zu den Walzenachsen verlaufenden horizontalen Richtung verstellt werden. Dazu können geeignete Elektromotoren vorgesehen sein, welche mittels einer (hier nicht gezeigten) Steuervorrichtung automatisch steuerbar sind. Die Lichtschranke 10a ist so angeordnet, dass damit die Werkstücke 7 automatisch gezählt werden können.

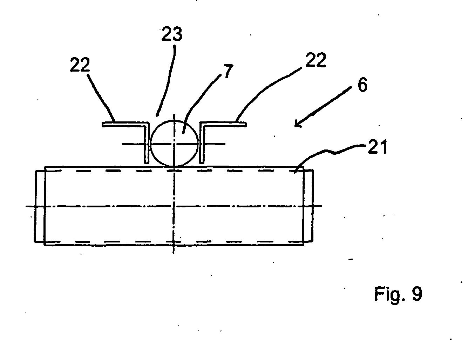

Fig. 9 zeigt eine Querschnittsansicht entlang der Schnittlinie B-B'. Die Einrichtung 6 zum Abführen besteht im Wesentlichen aus einem Förderband 21 an dessen Oberseite durch zwei weitere Winkelbleche 22 ein Abfuhrkanal 23 gebildet ist.

Die Funktion der ersten Vorrichtung ist folgende: Im Zufuhrkanal 15 werden die rotationssymmetrischen Werkstücke 7, bei denen es sich beispielsweise um Walzen für Wälzlager handelt, rollend in Richtung der Transportvorrichtung 2 aufeinander folgend zugeführt. Die Walzen 3a und 3b werden mittels des Motors 4 mit derselben Drehgeschwindigkeit angetrieben. Sie rotieren in dieselbe Richtung. Infolge der unter dem spitzen Winkel α eingestellten Spreizung sowie der unter dem weiteren spitzen Winkel β eingestellten vertikalen Verkippung der Walzenachsen werden die Werkstücke 7 rotierend in der Transportrinne 17 entlang der Transportrichtung 8 transportiert. Dabei werden die Werkstücke 7 entlang des Transportwegs an den Ultraschallprüfeinrichtungen 9a und 9b vorbeigeführt. Mittels der Ultraschallprüfeinrichtungen 9a und 9b erfolgt eine Prüfung der Werkstücke 7 auf Oberflächenfehler sowie auf in den Werkstücken 7 eingeschlossene Fehler. Mittels der Lichtschranken 10a und 10b kann die Reihenfolge der zugeführten Werkstücke 7 ermittelt werden. Das ermöglicht ein gezieltes Aussondern von als fehlerhaft identifizierten Werkstücken 7 mittels der Ausstoßmittel 12a und 12b. Mit der vorgeschlagenen Vorrichtung ist es insbesondere auch möglich, gesondert Werkstücke 7 mit Oberflächenfehlern und Werkstücke 7 mit im Inneren eingeschlossenen Fehlern auszusondern. Die Identifizierung von Werkstofffehlern sowie das Aussondern kann automatisiert unter Verwendung eines Computers erfolgen, der geeignet programmiert ist.

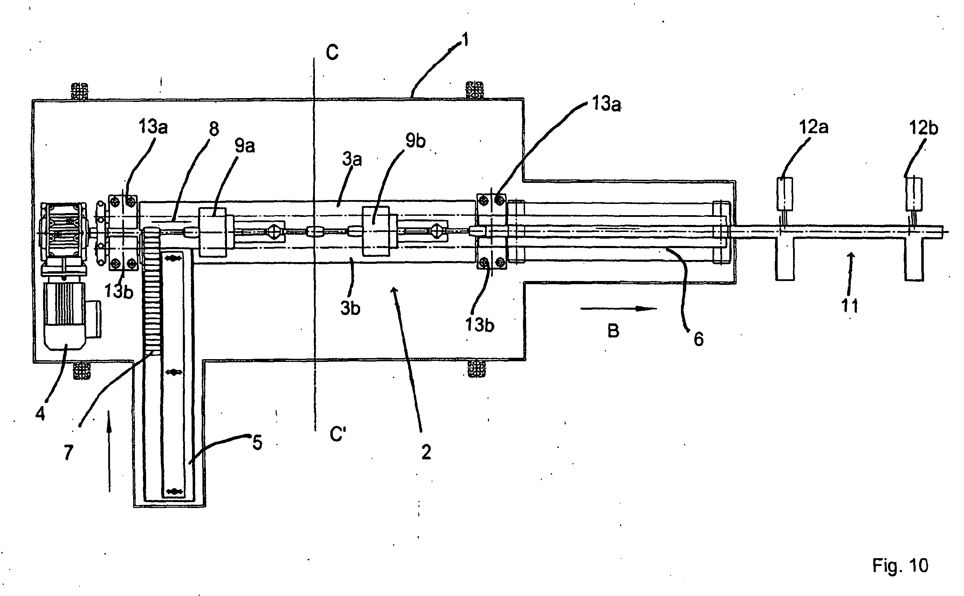

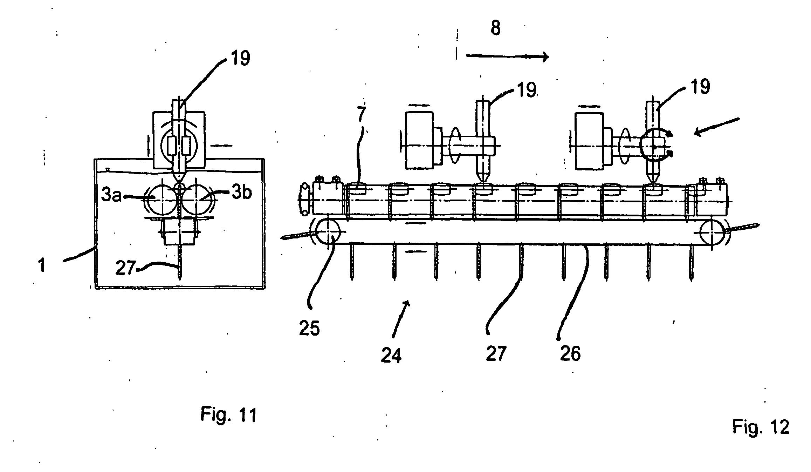

In den Fig. 10 bis 12 ist eine zweite erfindungsgemäße Vorrichtung gezeigt. Sie unterscheidet sich von der ersten Vorrichtung im Wesentlichen dadurch, dass hier zusätzlich ein allgemein mit dem Bezugszeichen 24 bezeichnetes Vorschubmittel zum taktweisen Vorschub der Werkstücke 7 in Transportrichtung 8 vorgesehen ist. Die zweite Vorrichtung eignet sich insbesondere zur Prüfung von in Form von Tonnenwalzen ausgeführten Werkstücken 7. Wie am besten aus den Fig. 11 und 12 ersichtlich ist, umfasst das Vorschubmittel 24 zwei Rollen 25, um die ein Riemen 26 umläuft. Zumindest eine der Rollen 25 ist mittels einer (hier nicht gezeigt) taktweise betreibbaren Antriebseinrichtung antreibbar. Der Riemen 26 weist in regelmäßigen Abständen an seiner den Rollen 25 abgewandten Außenseite Schubmittel 27 auf. Das Vorschubmittel 24 ist bezüglich der Walzen 3a, 3b so angeordnet, dass die Schubmittel 27 durch einen zwischen den Walzen 3a, 3b gebildeten Spalt hindurchgreifen. Die Schubmittel 27 sind in ihrer Länge so bemessen, dass sie an einer Grund-/Deckfläche der Werkstücke 7 anliegen. Infolgedessen kann durch eine Bewegung der Schubmittel 27 eine Bewegung der Werkstücke 7 in Transportrichtung 8 erzwungen werden. Bei der hier gezeigten zweiten Vorrichtung können die Walzen 3a, 3b horizontal und parallel zueinander angeordnet sein. Die bei der ersten Vorrichtung vorgesehene Verkippung der Achsen der Walzen 3a, 3b relativ zueinander ist hier nicht unbedingt erforderlich.

Anstelle der Rollen 25 sowie des Riemens 26 können selbstverständlich auch andere geeignete Mittel verwendet werden. Beispielsweise können anstelle der Rollen 25 Zahnscheiben, Riemenscheiben, Ritzel und dgl. verwendet werden. Anstelle des Riemens 26 kann ein Keilriemen, Zahnriemen oder eine Kette oder dgl. verwendet werden.

### Die Funktion der zweiten Vorrichtung ist folgende:

Die Werkstücke 7 werden ähnlich wie bei der ersten Vorrichtung mittels der Einrichtung 5 zum Zuführen zugeführt. Sie werden durch die Walzen 3a, 3b rotiert. Dabei liegen die Werkstücke 7 mit ihrer Grund- oder Deckfläche an einem Schubmittel 27 an. Eine unerwünschte Bewegung der Werkstücke 7 in oder entgegen der Transportrichtung 8 wird damit vermieden. Um das sicher zu gewährleisten, können die Schubmittel 27 so voneinander beabstandet sein, dass der Abstand geringfügig größer als eine axiale Länge der Werkstücke 7 ist. Die Werkstücke 7 werden mittels des Vorschubmittels 24 taktweise in Transportrichtung 8 transportiert. Sie werden dabei mittels der Ultraschallprüfköpfe 19 auf Fehler geprüft. Zu diesem Zweck werden die Ultraschallprüfköpfe 19 jeweils mit einer vorgegebenen Geschwindigkeit und auf einem vorgegebenen Weg entlang der Oberfläche der zu prüfenden Werkstücke 7 automatisch bewegt. Dazu sind die Ultraschallprüfköpfe an einer geeigneten elektromotorisch betreibbaren Bewegungseinrichtung angebracht. Während der Prüfung der Werkstücke 7 tauchen sowohl die Ultraschallprüfköpfe 19 als auch die Werkstücke wiederum in eine Flüssigkeit, beispielsweise Öl, als Kopplungsmedium ein. Der Abtransport der geprüften Werkstücke 7 kann analog wie bei der ersten Vorrichtung erfolgen.

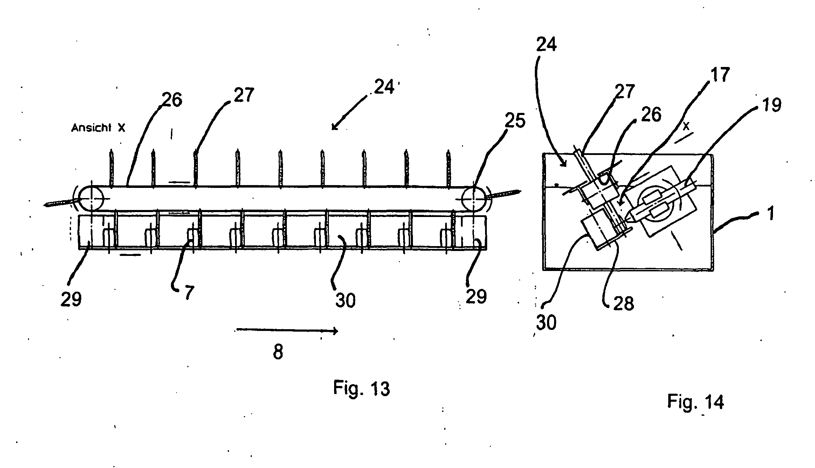

Die Fig. 13 und 14 zeigen eine dritte erfindungsgemäße Vorrichtung. Wie insbesondere aus Fig. 14 ersichtlich ist, ist hier eine Förderrinne 17 gebildet durch eine erste Wand 28, die beispielsweise aus einer Kunststoffplatte oder dgl. gebildet ist. Die erste Wand 28 steht schräg. Daran angebracht sind weitere Rollen 29, um die ein weiteres Förderband 30 umläuft. Eine der weiteren Rollen 29 ist kontinuierlich angetrieben (hier nicht gezeigt). Eine Förderseite des Förderbands 30 bildet eine zweite bewegbare Wand der Förderrinne 17. Diese zweite bewegbare Wand steht zweckmäßigerweise senkrecht zur ersten Wand 28. In Kombination mit der beschriebenen Förderrinne 17 ist wiederum das bereits oben erwähnte Vorschubmittel 24 vorgesehen. Das Vorschubmittel 24 ist so angeordnet, dass die Schubmittel 27 von oben her in die Förderrinne 17 eingreifen und bis nahe an die erste Wand 28 reichen. Die Werkstücke 7 sind mit ihrer Rotationsachse senkrecht zur Transportrichtung 8 in der Förderrinne 17 aufgenommen.

### Die Funktion der dritten Vorrichtung ist folgende:

Die Werkstücke 7 werden mit einer geeigneten Einrichtung zum Zuführen der Förderrinne 17 an einem ersten Ende zugeführt. Die Einrichtung zum Zuführen kann ähnlich der in der Fig. 1 gezeigten Einrichtung ausgebildet sein, wobei hier die Werkstücke allerdings stehend zugeführt werden. Sobald die Werkstücke 7 der Förderrinne 17 zugeführt worden sind, werden sie durch das Förderband gegen das Schubmittel 27 geführt. Infolge der kontinuierlichen Bewegung des Förderbands 30 wird das Werkstück 7 in eine Rotationsbewegung um seine Rotationsachse versetzt. Mittels des Vorschubmittels 24 wird das Werkstück 7 taktweise entlang des durch die Förderrinne 17 gebildeten Transportwegs transportiert. Entlang des Transportwegs sind in vorgegebenen Positionen die Ultraschallprüfköpfe 19 vorgesehen. Sie werden mittels einer Bewegungseinrichtung zur Prüfung der Werkstücke 7 über deren Oberfläche entlang eines vorgegebenen Wegs bewegt. Entlang des Transportwegs können mehrere Ultraschallprüfköpfe 19 zur Durchführung unterschiedlicher Ultraschallprüfungsverfahren vorgesehen sein.

### Bezugszeichenliste

- 1: Behälter
- 2: Transportvorrichtung
- 3a, 3b: Walze
- 4: Motor
- 5: Einrichtung zum Zuführen
- 6: Einrichtung zum Abführen
- 7: Werkstück
- 8: Transportrichtung
- 9a, 9b: Ultraschallprüfeinrichtung
- 10a, 10b: Lichtschranke
- 11: Einrichtung zum Aussondern
- 12a, 12b: Schubmittel
- 13a, 13b: Lagerbock
- 14: Keilriemen
- 15: Zuführkanal
- 16: Winkelblech
- 17: Förderrinne
- 18: Klemmvorrichtung
- 19: Ultraschallprüfkopf
- 20: Träger
- 21: Förderband
- 22: weiteres Winkelblech
- 23: Abführkanal
- 24: Vorschubmittel
- 25: Rolle
- 26: Riemen
- 27: Schubmittel
- 28: erste Wand
- 29: weitere Rolle
- 30: zweites Förderband
- α: spitzer Winkel
- β: weiterer spitzer Winkel

## Patentansprüche

1. Verfahren zur zerstörungsfreien Prüfung rotationssymmetrischer Werkstücke (7) mittels Ultraschall mit folgenden Schritten:
Aufeinander folgendes Zuführen der Werkstücke (7) zu einer in einer Flüssigkeit untergetauchten Transportvorrichtung (2),
Transport der Werkstücke (7) mittels der Transportvorrichtung (2) entlang eines Transportwegs, wobei die Werkstücke (7) mittels einer Rotationseinrichtung rotiert werden,
Prüfung der Werkstücke (7) mittels Ultraschall, wobei die Werkstücke (7) um ihre Achse rotiert werden und nachfolgend
Wegführen der Werkstücke (7) von der Transportvorrichtung (2),
**dadurch gekennzeichnet, dass**
die Werkstücke (7) in einer durch zwei nebeneinander angeordnete Walzen (3a, 3b) gebildeten Förderrinne (17) transportiert werden, wobei die Walzen gleichsinnig mittels der Rotationseinrichtung angetrieben werden, wobei eine Neigung (β) und/oder Spreizung (α) der Walzenachsen so eingestellt wird, dass die Werkstücke (7) mit einer vorgegebenen Geschwindigkeit entlang des Transportwegs transportiert werden.

2. Verfahren nach Anspruch 1, wobei die Werkstücke (7) gravitativ zugeführt werden.

3. Verfahren nach einem der vorhergehenden Ansprüche, wobei gleichzeitig mehrere Werkstücke (7) in der Förderrinne (17) transportiert werden.

4. Verfahren nach einem der vorhergehenden Ansprüche, wobei die Werkstücke (7) taktweise entlang des Transportwegs transportiert werden.

5. Verfahren nach einem der vorhergehenden Ansprüche, wobei die Werkstücke (7) durch ein in die Förderrinne (17) eingreifendes Schubmittel (27) taktweise transportiert werden.

6. Verfahren nach einem der vorhergehenden Ansprüche, wobei die Werkstücke (7) entlang des Transportwegs in einer parallel zur Axialrichtung der Werkstücke (7) verlaufenden Transportrichtung (8) transportiert werden.

7. Verfahren nach einem der vorhergehenden Ansprüche, wobei die Werkstücke (7) in Wesentlichen koaxial zu den Walzen (3a, 3b) in der Förderrinne (17) transportiert werden.

8. Verfahren nach einem der vorhergehenden Ansprüche, wobei die Werkstücke (7) reibschlüssig an den Walzen (3a, 3b) anliegen und durch deren Rotation um ihre Achse rotiert werden.

9. Verfahren nach einem der vorhergehenden Ansprüche, wobei die Werkstücke (7) auf dem Transportweg mittels einer ersten Ultraschallprüfeinrichtung (9a) auf Oberflächenfehler geprüft werden.

10. Verfahren nach einem der vorhergehenden Ansprüche, wobei die Werkstücke (7) auf dem Transportweg mittels einer zweiten Ultraschallprüfeinrichtung (9b) auf im Werkstück (7) eingeschlossene Fehler geprüft werden.

11. Verfahren nach einem der vorhergehenden Ansprüche, wobei fehlerhafte Werkstücke (7) identifiziert und nachfolgend ausgesondert werden.

12. Verfahren nach einem der vorhergehenden Ansprüche, wobei die Werkstücke (7) mittels einer, vorzugsweise elektromotorisch angetriebenen, Fördervorrichtung (6) weggeführt und aus der Flüssigkeit herausgehoben werden.

13. Verfahren nach einem der vorhergehenden Ansprüche, wobei die als fehlerhaft identifizierten Werkstücke (7) nach dem Herausheben aus der Flüssigkeit ausgesondert werden.

14. Vorrichtung zur zerstörungsfreien Prüfung rotationssymmetrischer Werkstücke (7)
mit einem Behälter (1) zur Aufnahme einer Flüssigkeit,
einer im Behälter (1) vorgesehenen Transportvorrichtung (2) zum Transport der Werkstücke (7) entlang eines Transportwegs,
einer Rotationseinrichtung zum Rotieren der Werkstücke (7) um ihre Achse und
einer Einrichtung (9a, 9b) zur Prüfung der rotierenden Werkstücke (7) mittels Ultraschall,
**dadurch gekennzeichnet, dass**
die Transportvorrichtung (2) zwei nebeneinander angeordnete, eine Förderrinne (17) bildende Walzen (3a, 3b) aufweist, und dass die Rotationseinrichtung eine Antriebseinrichtung (4, 14) zum gleichsinnigen Rotieren der Walzen (3a, 3b) ist, wobei die Walzenachsen eine einstellbare Neigung (β) und/oder Spreizung (α) aufweisen.

15. Vorrichtung nach Anspruch 14, wobei eine Einrichtung (5) zum aufeinander folgenden Zuführen der Werkstücke (7) zur Transportvorrichtung (2) und/oder eine Einrichtung (6) zum Wegführen der Werkstücke (7) von der Transportvorrichtung (2) vorgesehen ist/sind.

16. Vorrichtung nach Anspruch 15, wobei die Einrichtung (5) zum Zuführen der Werkstücke (7) einen zur Transportvorrichtung (2) hin schräg abfallenden Kanal (16) aufweist.

17. Vorrichtung nach einem der Ansprüche 14 bis 16, wobei die Förderrinne (17) so ausgebildet ist, dass darin gleichzeitig mehrere Werkstücke (7) aufnehmbar sind.

18. Vorrichtung nach Anspruch 17, wobei die Rotationseinrichtung so ausgebildet ist, dass damit die Werkstücke (7) gleichzeitig rotiert werden.

19. Vorrichtung nach einem der Ansprüche 14 bis 18, wobei eine Einrichtung zum taktweisen Transport der Werkstücke (7) entlang des Transportwegs vorgesehen ist.

20. Vorrichtung nach Anspruch 19, wobei die Einrichtung zum taktweisen Transport in die Förderrinne (17) eingreifende Schubmittel (27) aufweist.

21. Vorrichtung nach einem der Ansprüche 14 bis 20, wobei ein zwischen den Umfangsflächen der Walzen (3a, 3b) vorgesehener Abstand einstellbar ist.

22. Vorrichtung nach einem der Ansprüche 14 bis 21, wobei die Walzen (3a, 3b) aus einem für Ultraschall im Wesentlichen transparenten Material, vorzugsweise aus Kunststoff oder Gummi, hergestellt sind.

23. Vorrichtung nach einem der Ansprüche 14 bis 22, wobei eine Umfangsfläche der Walzen (3a, 3b) aus Kunststoff, Gummi oder Silikon hergestellt ist.

24. Vorrichtung nach einem der Ansprüche 14 bis 23, wobei in der Nähe des Transportwegs eine an einer, vorzugsweise elektromotorisch antreibbaren, ersten Bewegungseinrichtung angebrachte erste Ultraschallprüfeinrichtung (9a) zur Prüfung auf Oberflächenfehler vorgesehen ist.

25. Vorrichtung nach einem der Ansprüche 14 bis 24, wobei in der Nähe des Transportwegs eine an einer, vorzugsweise elektromotorisch antreibbaren, zweiten Bewegungseinrichtung angebrachte zweite Ultraschallprüfeinrichtung (9b) zur Prüfung auf im Werkstück (7) eingeschlossene Fehler vorgesehen ist.

26. Vorrichtung nach einem der Ansprüche 14 bis 25, wobei eine Einrichtung zum Identifizieren fehlerhafter Werkstücke (7) vorgesehen ist.

27. Vorrichtung nach einem der Ansprüche 14 bis 26, wobei eine Einrichtung (11, 12a, 12b) zum Aussondern fehlerhafter Werkstücke (7) vorgesehen ist.

28. Vorrichtung nach Anspruch 27, wobei die Einrichtung zum Aussondern (11, 12a, 12b) außerhalb des Behälters (1) angeordnet ist.

29. Vorrichtung nach einem der Ansprüche 25 bis 28, wobei eine Steuerung zum automatischen, vorzugsweise taktweisen, Transport und zur Steuerung der Bewegungseinrichtungen vorgesehen ist.

## Claims

1. Method for the non-destructive examination of rotation-symmetrical work pieces (7) by means of ultrasound with the following steps:
Consecutive feeding of the work pieces (7) to a transport device (2) which is submerged in a liquid,
transport of the work pieces (7) by means of the transport device (2) along a transport path, wherein the work pieces (7) are rotated by means of a rotation equipment,
examination of the work pieces (7) by means of ultrasound, wherein the work pieces (7) are rotated around their own axis and afterwards
the work pieces (7) are led away from the transport device (2),
**characterized in that**
the work pieces (7) are transported by a conveyor channel (17) created by two rollers (3a, 3b) arranged next to each other, wherein the rollers are driven in the same direction by the rotation equipment, wherein a slope (β) and/or angle of opening (α) of the roller axes is set so that the work pieces (7) are transported at a specified speed along the transport path.

2. Method as defined in claim 1, wherein the work pieces (7) are fed gravitationally.

3. Method as defined in one of the preceding claims, wherein a plurality of work pieces (7) are transported in the conveyor channel (17) at the same time.

4. Method as defined in one of the preceding claims, wherein the work pieces (7) are transported in cycles along the transport path.

5. Method as defined in one of the preceding claims, wherein the work pieces (7) are transported in cycles by a means of propulsion (27) engaging in the conveyor channel (17).

6. Method as defined in one of the preceding claims, wherein the work pieces (7) are transported along the transport path in a transport direction (8) which is parallel to the axial direction of the work pieces (7).

7. Method as defined in one of the preceding claims, wherein the work pieces (7) are transported essentially coaxially to the rollers (3a, 3b) in the conveyor channel (17).

8. Method as defined in one of the preceding claims, wherein the work pieces (7) rest frictionally engaged on the rollers (3a, 3b) and are rotated, by the rotation of these latters, around their axis.

9. Method as defined in one of the preceding claims, wherein the work pieces (7) are examined on the transport path for surface faults by means of a first ultrasonic examination equipment (9a).

10. Method as defined in one of the preceding claims, wherein the work pieces (7) on the transport path are examined on the transport path for faults enclosed in the work piece (7) by means of a second ultrasonic examination equipment (9b).

11. Method as defined in one of the preceding claims, wherein faulty work pieces (7) are identified and then separated out.

12. Method as defined in one of the preceding claims, wherein the work pieces (7) are led away, preferably by an electric motor-driven, conveyor device (6) and lifted out of the liquid.

13. Method as defined in one of the preceding claims, wherein the work pieces (7) which are identified as faulty are separated out after being lifted out of the liquid.

14. Device for the non-destructive examination of rotation-symmetrical work pieces (7)
with a container (1) for holding a liquid,
a transport device (2) provided in the container (1) for the transportation of the work pieces (7) along a transport path,
a rotation equipment for rotating the work pieces (7) around their axis and
an equipment (9a, 9b) for the examination of the rotating work pieces (7) by means of ultrasound,
**characterized in that**
the transport device (2) has two rollers arranged next to each other which create a conveyor channel (17), and that the rotation equipment is a drive equipment (4, 14) for the rotation of the rollers (3a, 3b) in the same direction, wherein the roller axes have an adjustable slope (β) and/or angle of opening (α).

15. Device as defined in claim 14, wherein an equipment (5) for the consecutive feeding of the work pieces (7) to the transport device (2) and/or an equipment (6) for the leading away of the work pieces (7) from the transport device (2) is/are provided.

16. Device as defined in claim 15, wherein the equipment (5) for feeding the work pieces (7) is provided with a channel sloping down to the transport device (2).

17. Device as defined in one of the claims 14 to 16, wherein the conveyor channel (17) is designed in such a manner that a plurality of work pieces (7) can be held inside at the same time.

18. Device as defined in claim 17, wherein the rotation equipment is designed in such a manner that the work pieces (7) are rotated by it simultaneously.

19. Device as defined in one of the claims 14 to 18, wherein an equipment is provided for the cyclic transport of the work pieces (7) along the transport path.

20. Device as defined in claim 19, wherein the equipment for the cyclic transport is provided with a means of propulsion (27) acting in the conveyor channel (17).

21. Device as defined in one of the claims 14 to 20, wherein a distance provided between the outside circumferences of the rollers (3a, 3b) is adjustable.

22. Device as defined in one of the claims 14 to 21, wherein the rollers (3a, 3b) are made of a material which is essentially transparent for ultrasound, preferably of plastic or rubber.

23. Device as defined in one of the claims 14 to 22, wherein an outside circumference of the rollers (3a, 3b) is made of plastic, rubber or silicone.

24. Device as defined in one of the claims 14 to 23, wherein in the vicinity of the transport path a first ultrasonic examination equipment (9a) attached to a first movement equipment, which can preferably be driven by an electric motor, is provided for the examination for surface faults.

25. Device as defined in one of the claims 14 to 24, wherein in the vicinity of the transport path a second ultrasonic examination equipment (9b) attached to a second movement equipment, which can preferably be driven by an electric motor, is provided for the examination for faults enclosed in the work piece (7).

26. Device as defined in one of the claims 14 to 25, wherein an equipment is provided for the identification of faulty work pieces (7).

27. Device as defined in one of the claims 14 to 26, wherein an equipment (11, 12a, 12b) is provided for the separating out of faulty work pieces (7).

28. Device as defined in claim 27, wherein the equipment for the separating out (11, 12a, 12b) is located outside the container (1).

29. Device as defined in one of the claims 25 to 28, wherein a controller is provided for the automatic, preferably cyclic transport, and for the control of the movement equipments.

## Revendications

1. Procédure de contrôle non destructif de pièces à usiner (7) symétriques en rotation au moyen d'ultrasons selon les opérations suivantes:
alimentation successive des pièces à usiner (7) vers un dispositif de transport (2) immergé dans un liquide,
transport des pièces à usiner (7) au moyen du dispositif de transport (2) sur la longueur du trajet de transport, suivant lequel les pièces à usiner (7) accomplissent une rotation au moyen d'un dispositif de rotation,
contrôle des pièces à usiner (7) au moyen d'ultrasons, suivant lequel les pièces à usiner (7) accomplissent une rotation autour de leur axe et consécutivement
retrait des pièces à usiner (7) du dispositif de transport (2),
**caractérisée en ce que**
les pièces à usiner (7) sont transportées dans une goulotte de transport (17) réalisée par deux rouleaux (3a, 3b) disposés côte à côte, où les rouleaux sont entraînés dans le même sens au moyen du dispositif de rotation, où une inclinaison (β) et/ou un angle d'ouverture (α) des axes de rouleaux est réglé de façon telle que les pièces à usiner (7) sont transportées sur la longueur du trajet de transport à une vitesse prédéfinie.

2. Procédure selon la revendication 1, selon laquelle les pièces à usiner (7) sont alimentées gravitationnellement.

3. Procédure selon l'une des revendications précédentes, selon laquelle plusieurs pièces à usiner (7) sont transportées simultanément dans la goulotte de transport (17).

4. Procédure selon l'une des revendications précédentes, selon laquelle les pièces à usiner (7) sont transportées de manière cadencée sur la longueur du trajet de transport.

5. Procédure selon l'une des revendications précédentes, selon laquelle les pièces à usiner (7) sont transportées de manière cadencée par un moyen de translation (27) s'engageant dans la goulotte de transport (17).

6. Procédure selon l'une des revendications précédentes, selon laquelle les pièces à usiner (7) sont transportées sur la longueur du trajet de transport dans un sens de transport (8) disposé parallèlement au sens axial des pièces à usiner (7).

7. Procédure selon l'une des revendications précédentes, selon laquelle les pièces à usiner (7) sont transportées essentiellement de manière coaxiale par rapport aux rouleaux (3a, 3b) dans la goulotte de transport (17).

8. Procédure selon l'une des revendications précédentes, selon laquelle les pièces à usiner (7) s'appliquent par friction aux rouleaux (3a, 3b) et, par la rotation de ces derniers, accomplissent une rotation autour de leur axe.

9. Procédure selon l'une des revendications précédentes, selon laquelle les pièces à usiner (7) sont soumises à un contrôle de défauts de surface sur le trajet de transport au moyen d'un premier dispositif de contrôle à ultrasons (9a).

10. Procédure selon l'une des revendications précédentes, selon laquelle les pièces à usiner (7) sont soumises à un contrôle de défauts internes à la pièce à usiner (7) sur le trajet de transport au moyen d'un deuxième dispositif de contrôle à ultrasons (9b).

11. Procédure selon l'une des revendications précédentes, selon laquelle des pièces à usiner (7) défectueuses sont identifiées et triées consécutivement.

12. Procédure selon l'une des revendications précédentes, selon laquelle les pièces à usiner (7) sont retirées au moyen d'un convoyeur (6), de préférence à entraînement par électromoteur, puis soulevées du liquide.

13. Procédure selon l'une des revendications précédentes, selon laquelle les pièces à usiner (7) identifiées comme défectueuses sont triées après les avoir soulevées du liquide.

14. Dispositif pour le contrôle non destructif de pièces à usiner (7) symétriques en rotation
avec un réservoir (1) destiné à recueillir un liquide,
un dispositif de transport (2) prévu dans le réservoir (1) pour le transport des pièces à usiner (7) sur la longueur d'un trajet de transport,
un dispositif de rotation destiné à la rotation des pièces à usiner (7) autour de leur axe et
un dispositif (9a, 9b) destiné au contrôle des pièces à usiner (7) en rotation au moyen d'ultrasons,
**caractérisé en ce que**
le dispositif de transport (2) présente deux rouleaux (3a, 3b) disposés côte à côte constituant une goulotte de transport (17), et que le dispositif de rotation est un dispositif d'entraînement (4, 14) pour une rotation de même sens des rouleaux (3a, 3b), les axes de rouleaux présentant une inclinaison (β) réglable et/ou un angle d'ouverture (α) réglable.

15. Dispositif selon la revendication 14, dans lequel un équipement (5) destiné à l'alimentation successive des pièces à usiner (7) vers le dispositif de transport (2) et/ou un équipement (6) destiné au retrait des pièces à usiner (7) du dispositif de transport (2) est/sont prévu(s).

16. Dispositif selon la revendication 15, dans lequel l'équipement (5) destiné à l'alimentation des pièces à usiner (7) présente un canal (16) en pente incliné vers le dispositif de transport (2).

17. Dispositif selon l'une des revendications 14 à 16, dans lequel la goulotte de transport (17) est telle qu'elle peut contenir simultanément plusieurs pièces à usiner (7).

18. Dispositif selon la revendication 17, dans lequel le dispositif de rotation est tel qu'il permet aux pièces à usiner (7) d'accomplir une rotation simultanée.

19. Dispositif selon l'une des revendications 14 à 18, dans lequel un équipement destiné au transport cadencé des pièces à usiner (7) est prévu sur la longueur du trajet de transport.

20. Dispositif selon la revendication 19, dans lequel l'équipement destiné au transport cadencé présente un moyen de translation (27) s'engageant dans la goulotte de transport (17).

21. Dispositif selon l'une des revendications 14 à 20, dans lequel un écartement prévu entre les surfaces circonférentielles des rouleaux (3a, 3b) est réglable.

22. Dispositif selon l'une des revendications 14 à 21, dans lequel les rouleaux (3a, 3b) sont réalisés en un métal essentiellement transparent pour ultrasons, de préférence en matière plastique ou en caoutchouc.

23. Dispositif selon l'une des revendications 14 à 22, dans lequel une surface circonférentielle des rouleaux (3a, 3b) est réalisée en matière plastique, en caoutchouc ou en silicone.

24. Dispositif selon l'une des revendications 14 à 23, dans lequel à proximité du trajet de transport un premier dispositif de contrôle à ultrasons (9a) monté sur un premier dispositif de déplacement, de préférence à entraînement par électromoteur, est prévu pour le contrôle des défauts de surface.

25. Dispositif selon l'une des revendications 14 à 24, dans lequel à proximité du trajet de transport un deuxième dispositif de contrôle à ultrasons (9b) monté sur un deuxième dispositif de déplacement, de préférence à entraînement par électromoteur, est prévu pour le contrôle des défauts internes à la pièce à usiner (7).

26. Dispositif selon l'une des revendication 14 à 25, dans lequel un équipement est prévu pour l'identification des pièces à usiner (7) défectueuses.

27. Dispositif selon l'une des revendications 14 à 26, dans lequel un équipement (11, 12a, 12b) est prévu pour trier les pièces à usiner (7) défectueuses.

28. Dispositif selon la revendication 27, dans lequel l'équipement destiné au tri (11, 12a, 12b) est placé à l'extérieur du réservoir (1).

29. Dispositif selon l'une des revendications 25 à 28, dans lequel est prévue une commande pour le transport automatique, de préférence cadencé, et pour la commande des dispositifs de déplacement.
